# FASCICULE DE BREVET EUROPEEN

(11) **EP 3 740 743 B1**
(45) Date de publication et mention de la délivrance du brevet: **09.08.2023**
(21) Numéro de dépôt: 19703394.7
(22) Date de dépôt: 09.01.2019
(51) Int. Cl.: G01H 15/00, G06F 3/01

(54) **DISPOSITIF DE MESURE DE L'IMPÉDANCE MÉCANIQUE D'UN DOIGT CONTACTANT UNE PAROI TACTILE, POUR UN APPAREIL**
VORRICHTUNG ZUR MESSUNG DER MECHANISCHEN IMPEDANZ EINES MIT EINER TAKTILEN WAND IN BERÜHRUNG STEHENDEN FINGERS FÜR EIN GERÄT
DEVICE FOR MEASURING THE MECHANICAL IMPEDANCE OF A FINGER CONTACTING A TACTILE WALL, FOR AN APPLIANCE

(30) Priorité: 19.01.2018 FR 1850449
(43) Date de publication de la demande: 25.11.2020
(73) Titulaire: PSA Automobiles SA, 78300 Poissy (FR); Centre National de la Recherche Scientifique, 75016 Paris Cedex 16 (FR); Universite d'Aix Marseille, 13284 Marseille Cedex 07 (FR)
(72) Inventeur: MONNOYER, Jocelyn, 13006 MARSEILLE (FR); WIERTLEWSKI, Michael, 13008 Marseille (FR)
(86) Numéro de dépôt international: PCT/FR2019/050038
(87) Numéro de publication internationale: WO 2019/141919

(56) Documents cités:
- US-B2- 8 405 618
- WIERTLEWSKI MICHAEL ET AL: "Transducer for mechanical impedance testing over a wide frequency range through active feedback", REVIEW OF SCIENTIFIC INSTRUMENTS, AIP, MELVILLE, NY, US, vol. 83, no. 2, 1 février 2012 (2012-02-01), pages 25001-25001, XP012161881, ISSN: 0034-6748, DOI: 10.1063/1.3683572 [extrait le 2012-02-13]
- MICHAEL WIERTLEWSKI ET AL: "Mechanical behavior of the fingertip in the range of frequencies and displacements relevant to touch", JOURNAL OF BIOMECHANICS, PERGAMON PRESS, NEW YORK, NY, US, vol. 45, no. 11, 19 mai 2012 (2012-05-19), pages 1869-1874, XP028400818, ISSN: 0021-9290, DOI: 10.1016/J.JBIOMECH.2012.05.045 [extrait le 2012-06-06]
- MORTIMER BRUCE ET AL: "Vibrotactile transduction and transducers", THE JOURNAL OF THE ACOUSTICAL SOCIETY OF AMERICA, AMERICAN INSTITUTE OF PHYSICS FOR THE ACOUSTICAL SOCIETY OF AMERICA, NEW YORK, NY, US, vol. 121, no. 5, 8 mai 2007 (2007-05-08), pages 2970-2977, XP012096616, ISSN: 0001-4966, DOI: 10.1121/1.2715669

## Description

L'invention concerne les dispositifs de mesure qui sont destinés à équiper certains appareils comprenant au moins une paroi tactile pouvant être contactée par un doigt d'un usager souhaitant commander au moins une fonction.

Certains appareils comprennent au moins une interface homme/machine comportant au moins une paroi tactile, éventuellement subdivisée en zones et faisant éventuellement partie d'un écran d'affichage tactile, qui, lorsqu'elle est contactée par l'extrémité d'un doigt d'un usager, induit ou déclenche la génération d'un signal destiné à commander une fonction. C'est par exemple le cas de certains organes de commande ou de certains appareils offrant une fonction d'affichage d'images (comme par exemple et non limitativement des équipements de communication (téléphones intelligents ou tablettes électroniques), des consoles de jeux (éventuellement communicantes), des terminaux ou écrans (éventuellement d'ordinateur)).

Certains de ces appareils assurent également au niveau de leur paroi tactile une fonction haptique qui permet de signaler à l'usager, via le sens du toucher de son doigt qui assure le contact, que ce dernier a été détecté et donc qu'il va servir à commander une fonction associée. Cette fonction haptique est généralement assurée par des moyens de vibration qui sont couplés à la paroi tactile et qui sont chargés de faire vibrer localement cette dernière lorsque le contact a été détecté.

Plusieurs études ont montré que la détection d'un contact tout comme le ressenti de la vibration haptique pouvait varier notablement d'une paroi tactile à une autre et d'une personne à une autre du fait de paramètres tels que, par exemple, l'état de surface de la paroi tactile (rugosité, présence de produit plus ou moins gras), la forme de l'extrémité du doigt, la puissance du doigt, la sensibilité de l'extrémité du doigt, et l'état de surface de l'extrémité du doigt (rugosité, présence de produit plus ou moins gras).

Plusieurs solutions ont été proposées pour favoriser le ressenti de la vibration haptique. Ainsi, il a été proposé dans les documents brevet US 8,405,618 et WO 2012/153061 de moduler l'amplitude de la vibration haptique afin de faire varier le frottement du doigt sur la paroi tactile et ainsi donner une illusion de forme ou de texture. Il a également été proposé dans les documents brevet WO 2012/004214 et US 8,264,465 de moduler l'amplitude de la vibration haptique en fonction de la pression exercée par le doigt. Cependant, la fiabilité de l'action de ces solutions s'avère très insuffisante.

Par ailleurs, la détection d'un contact (et de son intensité) nécessite le couplage de plusieurs capteurs de force (généralement à jauges de contraintes) à la paroi tactile, ce qui augmente notablement les coûts et l'encombrement, et augmente les risques d'erreur de détection, de panne et de dysfonctionnement. Cela est notamment décrit dans le document de Monnoyer, J., Diaz, E., Bourdin, C. and Wiertlewski, M., 2016, July « Ultrasonic Friction Modulation While Pressing Induces a Tactile Feedback », International Conférence on Human Haptic Sensing and Touch Enabled Computer Applications (pp. 171-179), Springer International Publishing. On connait aussi par le document de WIERTLEWSKI MICHAEL ET AL, "Transducer for mechanical impédance testing over a wide frequency range through active feedback", 01 février 2012 (2012-02-01), vol 83, no. 2, page 25001-25001 : une sonde mécanique active contrôlée par rétroaction qui peut atteindre une très faible impédance mécanique, uniformément sur une large gamme de fréquences. La rétroaction produit un état de quasi-résonance qui transforme la sonde en une source de force utilisée pour exciter une charge inconnue, résultant en une mesure précise des composantes réelles et imaginaires de l'impédance de charge à n'importe quelle fréquence.

L'invention a donc notamment pour but d'améliorer la situation.

Elle propose notamment à cet effet un dispositif de mesure conformément à la revendication 1.

Ainsi, on dispose grâce à l'impédance mécanique du doigt d'une information qui est représentative de l'énergie transmise entre la surface de l'interface (ou paroi tactile) et de la peau du doigt, contrairement aux mesures de force. Une forte impédance mécanique indique qu'il y a un couplage fort alors qu'une impédance mécanique plus faible indique que peu de peau est en contact avec la paroi tactile.

Le dispositif de mesure selon l'invention peut comporter d'autres caractéristiques qui peuvent être prises séparément ou en combinaison, et notamment :
- dans un premier mode de réalisation qui ne fait pas partie de l'invention, ses moyens d'action peuvent agir sur la paroi tactile à plusieurs fréquences prédéfinies pendant le contact avec une amplitude constante, et ses moyens de traitement peuvent déterminer une impédance mécanique d'un ensemble comportant la paroi tactile et le doigt en fonction de ces fréquences prédéfinies et de la vibration mesurée, puis peuvent déterminer l'impédance mécanique du doigt en déterminant une différence entre l'impédance mécanique de l'ensemble et l'impédance mécanique de la paroi tactile en l'absence de contact ;
- dans un deuxième mode de réalisation qui ne fait pas partie de l'invention, ses moyens d'action peuvent agir sur la paroi tactile à une unique fréquence prédéfinie pendant un contact, ses moyens de mesure peuvent mesurer la vibration en amplitude et en phase, et ses moyens de traitement peuvent déterminer l'impédance mécanique d'un ensemble comportant la paroi tactile et le doigt en effectuant un rapport entre une première transformée de Hilbert appliquée à une première fonction périodique représentative de l'action selon la fréquence prédéfinie sur la paroi tactile en l'absence de contact, et une seconde transformée de Hilbert appliquée à une seconde fonction périodique représentative de la vibration mesurée sur la paroi tactile en présence du contact, puis peuvent déterminer l'impédance mécanique du doigt en déterminant une différence entre l'impédance mécanique de l'ensemble et l'impédance mécanique de la paroi tactile en l'absence de contact ;
- dans un troisième mode de réalisation, ses moyens d'action agissent sur la paroi tactile à une unique fréquence prédéfinie pendant un contact, ses moyens de mesure mesurent la vibration en amplitude et en phase, et ses moyens de traitement déterminent l'impédance mécanique d'un ensemble comportant la paroi tactile et le doigt en effectuant un rapport entre une première transformée de Hilbert appliquée à une première fonction périodique représentative de l'action selon la fréquence prédéfinie sur la paroi tactile en l'absence de contact, et une troisième transformée de Hilbert appliquée à une troisième fonction périodique représentative de la vibration mesurée sur la paroi tactile en présence dudit contact et multipliée par un signal de référence à cette même fréquence prédéfinie et ayant une première partie de phase nulle et une seconde partie de phase égale à 90°, puis déterminent l'impédance mécanique du doigt en déterminant une différence entre l'impédance mécanique de l'ensemble et l'impédance mécanique de la paroi tactile en l'absence de contact ;
- ses moyens de traitement peuvent déterminer l'impédance mécanique en fonction également d'un modèle théorique de la paroi tactile. Ce dernier peut, par exemple, être de type dit masse - ressort - amortisseur ;
- ses moyens d'action peuvent agir sur la paroi tactile d'une façon choisie parmi une façon électrostatique, une façon électromagnétique, une façon piézoélectrique et une façon magnétostrictive.

L'invention propose également un appareil comprenant au moins une paroi tactile pouvant être contactée par un doigt d'un usager, et au moins un dispositif de mesure du type de celui présenté ci-avant et couplé à cette paroi tactile.

L'appareil selon l'invention peut comporter d'autres caractéristiques qui peuvent être prises séparément ou en combinaison, et notamment :
- il peut également comprendre des moyens de commande générant pour les moyens d'action un signal de contrôle qui est destiné à faire varier une amplitude de leur action lorsque l'impédance mécanique du doigt (imposée par l'usager) est supérieure à un seuil qui est représentatif d'une volonté de contact de l'usager, puis générant un signal de commande d'une fonction en cas de détection d'une variation de l'impédance mécanique du doigt, éventuellement supérieure à un autre seuil, consécutivement à cette variation d'amplitude ;
- en variante, il peut également comprendre des moyens de commande générant un signal destiné à commander une fonction lorsque l'impédance mécanique est supérieure à un seuil qui est représentatif d'une volonté de contact de l'usager ;
- en variante, il peut également comprendre des moyens de commande générant un signal destiné à moduler une fonction en relation avec une variation continue de l'impédance ;
- sa paroi tactile peut faire partie d'un écran d'affichage et être propre à afficher au moins une partie d'images.

L'invention propose également un véhicule, éventuellement de type automobile, et comprenant au moins un appareil du type de celui présenté ci-avant.

D'autres caractéristiques et avantages de l'invention apparaîtront à l'examen de la description détaillée ci-après, et des dessins annexés, sur lesquels :
- la figure 1 illustre schématiquement et fonctionnellement, dans une vue en perspective, un exemple d'appareil comprenant un exemple de réalisation d'un dispositif de mesure selon l'invention,
- la figure 2 illustre schématiquement au sein d'un diagramme l'évolution en fonction de la fréquence des réponses en fréquence de la paroi tactile en l'absence de contact (c1) et en présence d'un contact d'un doigt (c2),
- la figure 3 illustre schématiquement un modèle théorique de type dit masse - ressort - amortisseur d'une paroi tactile, et
- la figure 4 illustre schématiquement un exemple de signal d'excitation de la paroi tactile, un exemple d'évolution temporelle du déplacement de la paroi tactile PT respectivement en l'absence d'un doigt (c3) et en présence d'un doigt (c4), et l'impédance (Z) déduite de ces excitation et déplacement.

L'invention a notamment pour but de proposer un dispositif de mesure DM destiné à équiper un appareil AP, comprenant au moins une paroi tactile PT pouvant être contactée par un doigt DU d'un usager pour commander au moins une fonction, afin de fournir à cet appareil AP des mesures de l'impédance mécanique de l'interface entre ce doigt DU et cette paroi tactile PT.

Dans ce qui suit, on considère, à titre d'exemple non limitatif, que l'appareil AP est une interface homme/machine de type organe de commande propre à commander au moins une fonction d'un système. Mais l'invention n'est pas limitée à ce type d'appareil. Elle concerne en effet tout type d'appareil assurant au moins une fonction commandable par contact avec un doigt d'usager ou bien faisant partie d'un système assurant au moins une fonction commandable par contact avec un doigt d'usager. Ainsi, l'appareil AP pourra également et non limitativement être un écran d'affichage tactile ou un appareil offrant une fonction d'affichage d'images (comme par exemple et non limitativement un équipement de communication (téléphone intelligent ou tablette électronique), une console de jeux (éventuellement communicante), ou un terminal ou écran (éventuellement d'ordinateur)), ou encore un appareil de mesures biométriques.

On notera que lorsque l'appareil AP est, ou comprend, un écran d'affichage tactile, la paroi tactile PT peut faire partie de cet écran d'affichage et être propre à afficher au moins une partie d'images.

Par ailleurs, on considère dans ce qui suit, à titre d'exemple non limitatif, que le système dont fait partie l'appareil AP est un véhicule automobile, comme par exemple une voiture. Mais l'invention n'est pas limitée à ce type de système. En effet, l'appareil AP peut faire partie de n'importe quel système assurant au moins une fonction commandable, et notamment d'un véhicule (terrestre, maritime (ou fluvial), ou aérien), d'une installation (éventuellement industrielle), d'un bâtiment, ou d'un équipement électronique (éventuellement électroménager).

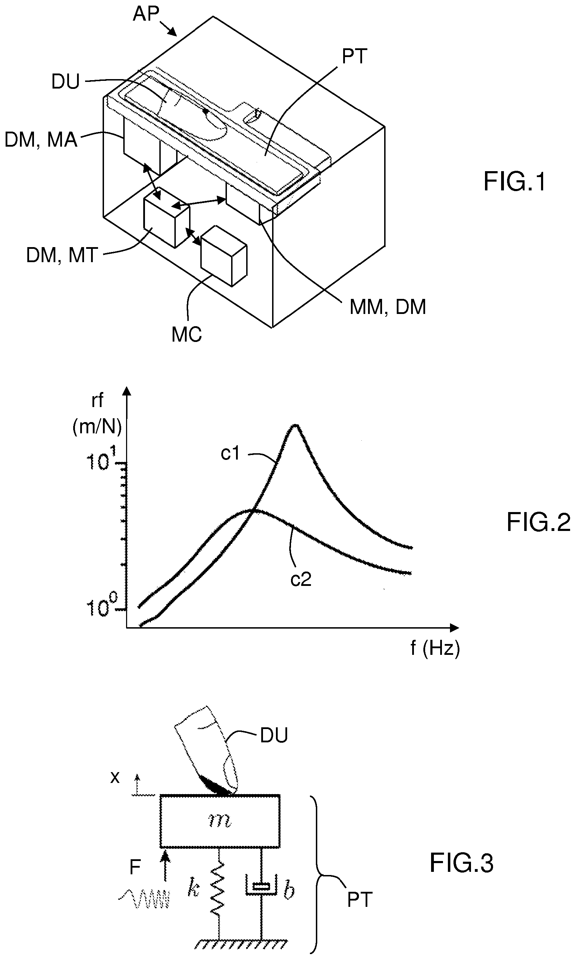

On a schématiquement représenté sur la figure 1 un exemple d'appareil AP comprenant un exemple de réalisation d'un dispositif de mesure DM selon l'invention.

On notera que dans l'exemple illustré non limitativement sur la figure 1 l'appareil AP ne comprend qu'une seule paroi tactile PT non subdivisée en zones indépendantes. Mais il pourrait comprendre une seule paroi tactile PT subdivisée en zones indépendantes et couplées à un même dispositif de mesure DM ou à des dispositifs de mesure DM indépendants les uns des autres, ou bien plusieurs (au moins deux) parois tactiles PT couplées à un même dispositif de mesure DM ou bien à des dispositifs de mesure DM indépendants les uns des autres.

On notera également que la face externe de la paroi tactile PT, destinée à être contactée par un doigt DU, n'est pas forcément plane. Elle pourrait en effet présenter au moins une courbure.

Par exemple, la (chaque) paroi tactile PT peut être réalisée en verre, ou en aluminium, ou encore dans une matière plastique rigide telle que le polycarbonate (ou PC) ou le poly-méthacrylate de méthyle (ou PMMA).

Comme illustré sur la figure 1, un dispositif de mesure DM, selon l'invention, comprend des moyens d'action MA, des moyens de mesure MM et des moyens de traitement MT.

Les moyens d'action MA sont agencés de manière à agir sur la paroi tactile PT afin de faire vibrer la paroi tactile PT et le doigt DU à au moins une fréquence prédéfinie fp, pendant un contact. Cette action consiste à appliquer une force F sur la paroi tactile PT. Ces moyens d'action MA peuvent, par exemple, être solidarisés à la paroi tactile PT (de préférence du côté de sa face interne pour être invisible de l'usager).

Lorsque l'extrémité d'un doigt DU contacte une paroi tactile PT subissant une action (ou force F) à au moins une fréquence prédéfinie fp, elle fait l'objet d'une lévitation partielle qui module le frottement du doigt sur cette paroi tactile PT en fonction de l'amplitude de l'action.

Par exemple, les moyens d'action MA peuvent agir sur la paroi tactile PT à chaque fréquence prédéfinie fp d'une façon électrostatique, d'une façon piézoélectrique, d'une façon électromagnétique ou d'une façon magnétostrictive.

Par ailleurs, comme illustré dans le diagramme de la figure 2, lorsque la paroi tactile PT est excitée à plusieurs fréquences prédéfinies fp, sa réponse en fréquence rf varie selon qu'elle est non contactée (c1) ou contactée (C2). Plus précisément, la réponse en fréquence rf de la paroi tactile PT excitée et contactée est centrée sur une fréquence réelle fr qui est décalée par rapport à la fréquence centrale des fréquences prédéfinies fp utilisées pour l'excitation. La détection de ce décalage peut donc indiquer, par exemple, qu'il y a un contact du doigt sur la paroi tactile PT.

Il est important de noter que les moyens d'action MA agissent de façon continue (ou permanente) sur la paroi tactile PT. Ainsi, la présence du doigt DU vient perturber l'impédance de la paroi tactile PT (qui se comporte déjà comme un système masse-ressort-amortisseur (ou analogue) et a son impédance propre). Le doigt DU vient modifier cette impédance globale mesurée. Cela permet d'extraire les paramètres propres à la perturbation du doigt DU à l'interface. Il est aussi important de noter que l'interface entre le doigt DU et la paroi tactile PT est modifiée par les propriétés d'adhérence entre le doigt DU et la paroi tactile PT. On mesure donc l'impédance du doigt DU plus ou moins en contact avec la paroi tactile PT selon l'effet haptique émis par la paroi tactile PT du fait de l'action continue précitée. Plus le doigt DU est en contact avec la paroi tactile PT plus il va avoir la possibilité d'absorber de l'énergie, et donc de faire baisser l'impédance. On recherche donc une variation de l'impédance.

Par exemple, les fréquences prédéfinies fp peuvent être centrées sur, ou l'unique fréquence prédéfinie fp peut être égale à, une fréquence de résonance de la paroi tactile PT. Cela permet d'avoir des signaux avec un faible niveau de bruit (et avec une amplitude suffisante pour induire une lévitation de la peau). Mais cela n'est pas obligatoire. Pour que l'action F soit inaudible par l'oreille humaine, les fréquences prédéfinies fp peuvent appartenir au domaine des ultrasons. Dans ce cas, lorsque la paroi tactile PT est en verre, on peut, par exemple, utiliser une fréquence de résonance d'environ 35 kHz. Mais cette fréquence prédéfinie fp peut être comprise entre environ 20 kHz et environ 200 MHz.

Les moyens de mesure MM sont agencés pour mesurer une vibration de la paroi tactile PT en présence de la (des) fréquence(s) prédéfinie(s) fp et du contact du doigt DU. Ils (MM) sont donc couplés à la paroi tactile PT, par exemple sur sa face interne qui est opposée à sa face externe que contacte le doigt DU.

Pour mesurer cette vibration (à une fréquence réelle fr) de la paroi tactile PT, les moyens de mesure MM peuvent, par exemple, mesurer un déplacement de la paroi tactile PT suivant la direction transversale x. Mais il pourrait également s'agir du déplacement suivant une direction latérale, perpendiculaire à la direction transversale x. A cet effet, ils (MM) peuvent, par exemple, comprendre un élément piézoélectrique solidarisé à la paroi tactile PT (de préférence du côté de sa face interne pour être invisible de l'usager). Cet élément piézoélectrique peut, par exemple, générer des ondes ultrasonores, et on déduit la vibration de mesures du courant dans l'élément piézoélectrique, par exemple au moyen d'un capteur capacitif, d'un capteur à jauges de contraintes ou d'une méthode interférométrique.

En variante, les moyens de mesure MM peuvent, par exemple, effectuer des mesures électriques en comparant les variations d'une relation entre le courant et la tension. C'est ce que l'on appelle en anglais le « self sensing ». Si on impose une tension aux éléments vibrants (ou actionneurs), alors une analyse du courant fourni permet de remonter à l'impédance électrique qui est influencée par l'impédance mécanique imₑ de l'ensemble paroi tactile PT / doigt DU.

Les moyens de traitement (ou de calcul) MT sont agencés pour déterminer une impédance mécanique im_{DU} du doigt DU en fonction de la (des) fréquence(s) prédéfinie(s) fp, de la vibration mesurée et de l'impédance mécanique im_{PT} de la paroi tactile PT en l'absence de contact (ou « à vide »).

Cette impédance mécanique im_{DU} du doigt DU est définie comme le rapport entre la force appliquée sur la paroi tactile PT et la mobilité du doigt DU (position, vitesse ou accélération), déduite de la vibration mesurée. Elle est donc représentative du couplage mécanique entre la paroi tactile PT et le doigt DU.

L'état de surface de la face externe de la paroi tactile PT va influer sur l'adhérence du doigt DU, qui va influer sur l'impédance mécanique de l'ensemble imₑ. Il est cependant difficile d'estimer l'état d'adhérence par l'état de surface et les forces en jeu. Par conséquent, la connaissance en temps réel de l'impédance mécanique im_{DU} du doigt DU peut permettre de décider si oui ou non il y a un contact effectivement souhaité par l'usager, et éventuellement de déclencher une réponse haptique dont les conséquences seront analysables, comme on le verra plus loin.

Les impédances mécaniques en présence d'un contact sont déterminées en fonction d'un étalonnage réalisé préalablement (par exemple en usine ou à l'initialisation) en l'absence de contact (ou à vide). Cet étalonnage est destiné à déterminer les paramètres mécaniques de la paroi tactile PT non contactée.

La détermination de l'impédance mécanique im_{DU} du doigt DU peut se faire d'au moins trois façons.

Dans une première façon, les moyens d'action MA agissent sur la paroi tactile PT à plusieurs fréquences prédéfinies fp pendant un contact. L'ensemble (paroi tactile PT /doigt DU) est donc excité avec une force d'actionnement F d'amplitude constante suivant un balayage en fréquences sinusoïdal qui couvre une plage centrée sur une fréquence centrale (éventuellement une fréquence de résonance naturelle de la paroi tactile PT (par exemple égale à 35 kHz)).

Les moyens de traitement MT déterminent alors une impédance mécanique imₑ de l'ensemble comportant la paroi tactile PT et le doigt DU en fonction des fréquences prédéfinies fp et de la vibration mesurée, puis déterminent l'impédance mécanique im_{DU} du doigt DU en déterminant la différence entre l'impédance mécanique de l'ensemble imₑ et l'impédance mécanique im_{PT} de la paroi tactile PT en l'absence de contact (ou à vide).

Cette première façon n'offre pas des résultats en temps réel puisqu'il faut plusieurs secondes pour faire un balayage en fréquences sinusoïdal fin.

Dans une deuxième façon, les moyens d'action MA agissent sur la paroi tactile PT à une unique fréquence prédéfinie fp pendant un contact, et les moyens de mesure MM mesurent la vibration en amplitude et en phase. Cette action des moyens d'action MA se fait au moyen d'une excitation sinusoïdale qui induit une vibration de la paroi tactile PT avec une amplitude et une phase relative qui dépend de l'impédance imₑ de l'ensemble (paroi tactile PT /doigt DU).

Dans ce cas, les moyens de traitement MT déterminent l'impédance mécanique de l'ensemble imₑ en effectuant un rapport entre des première h1 et seconde h2 transformées de Hilbert (soit imₑ = h1/h2). La première transformée de Hilbert h1 est appliquée à une première fonction périodique f1 qui est représentative de l'action F selon les fréquences prédéfinies fp sur la paroi tactile PT en l'absence de contact (ou à vide). La seconde transformée de Hilbert h2 est appliquée à une seconde fonction périodique f2 qui est représentative de la vibration mesurée sur la paroi tactile PT en présence du contact.

Il est rappelé que l'application d'une transformée de Hilbert à une fonction périodique permet avantageusement de reconstruire la partie imaginaire d'un signal périodique à partir d'un signal réel pour obtenir la représentation de l'oscillation dans le plan complexe.

La première fonction périodique f1 peut être le signal périodique qui est appliqué à (et donc agit sur) la paroi tactile PT par les moyens d'action MA. Par exemple, on peut utiliser une première fonction périodique f1 définie par v₀*sin (wt), où v₀ est l'amplitude de l'action.

La seconde fonction périodique f2 (ou réponse en fréquence mesurée) peut être un déplacement mesuré de la paroi tactile PT suivant une direction transversale x qui est perpendiculaire à sa face externe (voir figure 3). Par exemple, on peut utiliser une seconde fonction périodique f2 définie par x₀*sin (ωt-ϕ), où x₀ est l'amplitude du déplacement de la paroi tactile PT, ϕ est le déphasage par rapport à f1, et ω est la pulsation réelle qui est égale à 2π*fr (fr étant la fréquence réelle déduite de la réponse en fréquence mesurée par les moyens de mesure MM).

On a alors |imₑ| = (Im² + Re²)^{1/2} = h1/h2 = H(v₀*sin (ωt)/H(x₀*sin (ωt-ϕ)), où Im est la partie imaginaire de l'impédance mécanique de l'ensemble imₑ, Re est la partie réelle de l'impédance mécanique de l'ensemble imₑ, et H est la transformée de Hilbert.

Ensuite, les moyens de traitement MT déterminent l'impédance mécanique im_{DU} du doigt DU en déterminant la différence entre l'impédance mécanique de l'ensemble imₑ et l'impédance mécanique im_{PT} de la paroi tactile PT en l'absence de contact (ou à vide).

On notera que lorsque les moyens d'action MA comportent des éléments (ou actionneurs) piézoélectriques les signaux de force F sont proportionnels à la tension appliquée à ces éléments (ou actionneurs) piézoélectriques. Par ailleurs, lorsque les moyens de mesure MM mesurent une déformation, la vibration (ou les signaux de vibration) sont déduits d'une dérivée de la déformation qui représente la vitesse crête à crête.

On notera également que pour être exact la reconstruction du signal complexe de la vibration mesurée par les moyens de mesure MM se fait en ajoutant la partie réelle Re(x) à i*H(Re(x)) ou H est la transformée de Hilbert.

Dans une troisième façon dite de démodulation phase-amplitude (ou IQ), les moyens d'action MA agissent sur la paroi tactile PT à une unique fréquence prédéfinie fp pendant un contact, et les moyens de mesure MM mesurent la vibration en amplitude et en phase. Cette action des moyens d'action MA se fait au moyen d'une excitation sinusoïdale qui induit une vibration de la paroi tactile PT avec une amplitude et une phase relative qui dépend de l'impédance mécanique imₑ de l'ensemble (paroi tactile PT /doigt DU).

Dans ce cas, les moyens de traitement MT déterminent l'impédance mécanique de l'ensemble imₑ en effectuant un rapport entre des première h1 et troisième h3 transformées de Hilbert (soit imₑ = h1/h3). La première transformée de Hilbert h1 est appliquée à une première fonction périodique f1 qui est représentative de l'action F selon les fréquences prédéfinies fp sur la paroi tactile PT en l'absence de contact (ou à vide). La troisième transformée de Hilbert h3 est appliquée à une troisième fonction périodique f3 qui est représentative de la vibration mesurée sur la paroi tactile PT en présence du contact et multipliée par un signal de référence de même fréquence prédéfinie fp et ayant une première partie I (« in phase » - en phase) de phase nulle (0) et une seconde partie Q (quadrature) de phase égale à 90°. A chaque instant, on obtient ainsi une reconstruction de la vibration dans le plan complexe ce qui permet d'en déduire l'impédance mécanique de l'ensemble imₑ en temps réel par la division h1/h3.

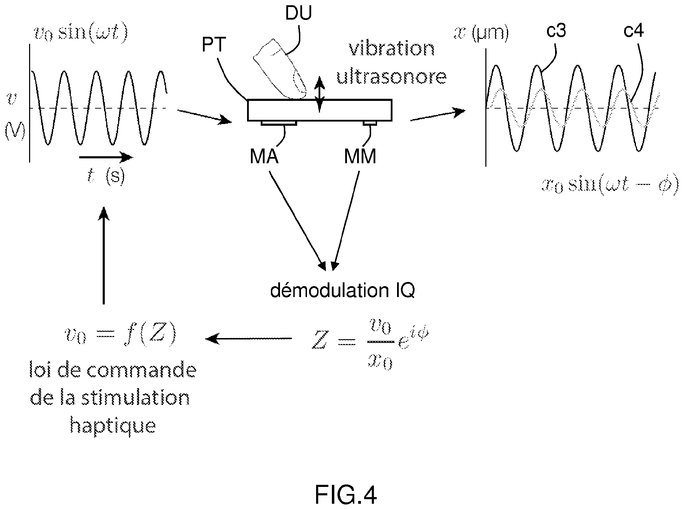

La première fonction périodique f1 peut être le signal périodique qui est appliqué à (et donc agit sur) la paroi tactile PT par les moyens d'action MA. Par exemple, on peut utiliser une première fonction périodique f1 définie par v₀*sin (ωt), où v₀ est l'amplitude de l'action, comme illustré schématiquement sur la figure 4.

La troisième fonction périodique f3 (ou réponse en fréquence mesurée) peut être un déplacement mesuré de la paroi tactile PT suivant une direction transversale x qui est perpendiculaire à sa face externe (voir figure 3). Par exemple, on peut utiliser une troisième fonction périodique f3 définie, avant multiplication par le signal de référence précité, par x₀*sin (ωt-ϕ), où x₀ est l'amplitude du déplacement de la paroi tactile PT, ϕ est le déphasage par rapport à f1, et w est la pulsation réelle qui est égale à 2π*fr (fr étant la fréquence réelle déduite de la réponse en fréquence mesurée par les moyens de mesure MM), comme illustré schématiquement sur la figure 4.

Sur la figure 4, les courbes c3 et c4 matérialisent les évolutions temporelles du déplacement x de la paroi tactile PT respectivement en l'absence du doigt DU et en présence du doigt DU.

La démodulation se faisant en temps réel, on peut donc avoir accès à l'impédance mécanique de l'ensemble imₑ (ou Z) en temps réel. On a en effet imₑ = Z = (v₀/x₀)e^{iϕ} dans le cas d'une démodulation de type IQ.

Ensuite, les moyens de traitement MT déterminent l'impédance mécanique im_{DU} du doigt DU en déterminant la différence entre l'impédance mécanique de l'ensemble imₑ et l'impédance mécanique im_{PT} de la paroi tactile PT en l'absence de contact (ou à vide).

On notera que les moyens de traitement MT peuvent déterminer l'impédance mécanique de l'ensemble imₑ en fonction également d'un modèle théorique de la paroi tactile PT. Un tel modèle théorique sert principalement à expliquer la nature de l'impédance mécanique de l'ensemble imₑ en termes d'éléments dynamiques.

Comme illustré sur la figure 3, ce modèle théorique peut, par exemple, être de type dit masse - ressort - amortisseur. Dans ce cas, ce modèle théorique est défini par une équation comprenant une masse m, un coefficient de raideur k et un coefficient d'amortissement b. Le module |im| de l'impédance mécanique de l'ensemble imₑ est alors égal à (b² + m²ω²)^{1/2}.

Comme évoqué plus haut, les mesures de l'impédance mécanique im_{DU} du doigt DU peuvent être utilisées par un appareil AP d'au moins deux façons.

Dans une première façon, l'appareil AP doit comprendre des moyens de commande MC qui génèrent pour les moyens d'action MA un signal de contrôle destiné à faire varier l'amplitude de leur action (par exemple v₀) lorsque l'impédance mécanique im_{DU} du doigt DU est supérieure à un seuil s1 qui est représentatif d'une volonté de contact de l'usager. Cette variation de l'amplitude de l'action, de préférence par une augmentation (éventuellement en créneau), est destinée à induire une variation de l'impédance mécanique im_{DU} du doigt DU qui est ressentie par l'usager comme un « clic » consécutif à une action sur une touche de commande, et donc l'informant que son contact a été détecté. On génère donc ainsi un effet haptique via la paroi tactile PT. On notera que le seuil s1 peut éventuellement varier d'un usager à l'autre. On sait qu'un seuil est suffisant lorsque l'on constate qu'il y a eu un saut d'impédance, suite à un « clic » (ou appui). S'il y a eu un saut d'impédance significatif après le décèlement il est probable que le phénomène de libération de l'énergie de contact a eu lieu et que l'utilisateur a effectivement perçu le clic. C'est l'ajustement à ce seuil d'impédance de déclenchement, qui permet judicieusement de s'adapter à un usager donné. On peut faire une calibration de l'impédance du doigt DU de l'usager, et estimer son impédance en réalisant un balayage de fréquence (ou « chirp » en anglais). Si ce balayage est réalisé à force d'appui constante, on peut faire une estimation qui permet de catégoriser l'usager par son impédance théorique.

Puis, si les moyens de commande MC détectent une variation de l'impédance mécanique im_{DU} du doigt DU, éventuellement supérieure à un autre seuil s2, consécutivement à cette variation d'amplitude, ils génèrent un signal de commande d'une fonction (de leur appareil AP ou du système comprenant ce dernier (AP)). En d'autres termes, en présence d'un contact avéré (im_{DU} > s1), on ne signale ce contact qu'en présence d'une variation de l'impédance mécanique im_{DU} du doigt DU, induite par la variation de l'amplitude de l'action, éventuellement supérieure à l'autre seuil s2. Dans le cas contraire, on considère que l'usager n'a pas ressenti le clic et donc on ne génère pas de signal de commande et on attend que l'usager réalise un nouveau contact.

Dans une seconde façon, l'appareil AP doit également comprendre des moyens de commande MC. Mais ces derniers (MC) génèrent un signal destiné à commander une fonction (de leur appareil AP ou du système comprenant ce dernier (AP)) lorsque l'impédance mécanique im_{DU} du doigt DU est supérieure à un seuil s1' représentatif d'une volonté de contact de l'usager. Dans cette seconde façon (plus basique que la première), il n'y a donc pas d'effet haptique mis en oeuvre. On notera que le seuil s1' peut éventuellement varier d'un usager à l'autre On peut faire une calibration de l'impédance du doigt DU de l'usager, et estimer son impédance en réalisant un balayage de fréquence (chirp). Si ce balayage est réalisé à force d'appui constante, on peut faire une estimation qui permet de catégoriser l'usager par son impédance théorique.

L'invention offre plusieurs avantages, parmi lesquels :
- elle permet de s'affranchir de l'utilisation de capteurs de force, chers et encombrants, du fait qu'elle offre une « auto-détection »,
- elle permet une réactivité très rapide du fait de la simplicité des calculs devant être réalisés par les moyens de traitement et les moyens de contrôle,
- elle permet de s'affranchir de l'environnement (et notamment de l'état de surface de la paroi tactile) et du type de doigt,
- elle permet éventuellement d'offrir un effet haptique fiable du fait que l'impédance mécanique est la grandeur physique qui est la mieux corrélée à la perception tactile humaine,
- elle peut être compatible avec des mesures biométriques (si on couple la mesure d'impédance mécanique avec une mesure de forces alors chaque usager dispose d'un profil force/impédance spécifique).

## Revendications

1. Dispositif de mesure (DM) pour un appareil (AP) comprenant au moins une paroi tactile (PT) contactable par un doigt d'un usager, comprenant i) des moyens d'action (MA) agissant sur ladite paroi tactile (PT) afin de faire vibrer ladite paroi tactile (PT) et ledit doigt à au moins une fréquence prédéfinie, pendant un contact, ii) des moyens de mesure (MM) pour mesurer une vibration de ladite paroi tactile (PT) en présence de ladite fréquence prédéfinie et dudit contact, et iii) des moyens de traitement (MT) pour déterminer une impédance mécanique du doigt, en fonction de ladite fréquence prédéfinie, de ladite vibration mesurée, et d'une impédance mécanique de ladite paroi tactile (PT) en l'absence de contact, **caractérisé en ce que** lesdits moyens d'action (MA) sont configurés pour agir sur ladite paroi tactile (PT) à une unique fréquence prédéfinie pendant ledit contact, **en ce que** lesdits moyens de mesure (MM) sont configurés pour mesurer ladite vibration en amplitude et en phase, et **en ce que** lesdits moyens de traitement (MT) sont configurés pour déterminer une impédance mécanique d'un ensemble comportant ladite paroi tactile (PT) et ledit doigt en effectuant un rapport entre une première transformée de Hilbert appliquée à une première fonction périodique représentative de ladite action selon la fréquence prédéfinie sur ladite paroi tactile (PT) en l'absence de contact, et une troisième transformée de Hilbert appliquée à une troisième fonction périodique représentative de ladite vibration mesurée sur ladite paroi tactile (PT) en présence dudit contact et multipliée par un signal de référence à ladite fréquence prédéfinie et ayant une première partie de phase nulle et une seconde partie de phase égale à 90°, puis sont configurés pour déterminer ladite impédance mécanique du doigt en déterminant une différence entre ladite impédance mécanique de l'ensemble et ladite impédance mécanique de ladite paroi tactile (PT) en l'absence de contact.

2. Dispositif selon la revendication 1, **caractérisé en ce que** lesdits moyens d'action (MA) sont configurés pour agir sur ladite paroi tactile (PT) d'une façon choisie parmi une façon électrostatique, une façon électromagnétique, une façon piézoélectrique et une façon magnétostrictive.

3. Appareil (AP) comprenant au moins une paroi tactile (PT) contactable par un doigt d'un usager, **caractérisé en ce qu'**il comprend en outre au moins un dispositif de mesure (DM) selon l'une des revendications précédentes, couplé à ladite paroi tactile (PT).

4. Appareil selon la revendication 3, **caractérisé en ce qu'**il comprend en outre des moyens de commande (MC) pour générer pour lesdits moyens d'action (MA) un signal de contrôle destiné à faire varier une amplitude de leur action lorsque ladite impédance mécanique du doigt est supérieure à un seuil représentatif d'une volonté de contact dudit usager, puis pour générer un signal de commande d'une fonction en cas de détection d'une variation de ladite impédance mécanique du doigt consécutivement à cette variation d'amplitude.

5. Appareil selon la revendication 3, **caractérisé en ce qu'**il comprend en outre des moyens de commande (MC) pour générer un signal destiné à commander une fonction lorsque ladite impédance mécanique est supérieure à un seuil représentatif d'une volonté de contact dudit usager.

6. Appareil selon l'une des revendications 3 à 5, **caractérisé en ce que** ladite paroi tactile (PT) fait partie d'un écran d'affichage et est propre à afficher au moins une partie d'images.

7. Véhicule, **caractérisé en ce qu'**il comprend au moins un appareil (AP) selon l'une des revendications 3 à 6.

## Patentansprüche

1. Messvorrichtung (DM) für ein Gerät (AP) mit mindestens einer berührbaren Wand (PT), die von einem Finger eines Benutzers berührt werden kann, mit i) Betätigungsmitteln (MA), die auf die berührbare Wand (PT) einwirken, um die berührbare Wand (PT) und den Finger mit mindestens einer vordefinierten Frequenz während einer Berührung in Schwingung zu versetzen, ii) Messmitteln (MM) zum Messen einer Schwingung der berührbaren Wand (PT) bei Vorhandensein der vordefinierten Frequenz und der Berührung, und iii) Verarbeitungsmittel (MT) zum Bestimmen einer mechanischen Impedanz des Fingers als Funktion der vordefinierten Frequenz, der gemessenen Vibration und einer mechanischen Impedanz der Berührungswand (PT) in Abwesenheit von Kontakt, **dadurch gekennzeichnet, dass** die Wirkungsmittel (MA) so konfiguriert sind, dass sie auf die Berührungswand (PT) mit einer einzigen vordefinierten Frequenz während des Kontakts wirken, dass die Messmittel (MM) so konfiguriert sind, dass sie die Vibration in Amplitude und Phase messen, und dass die Verarbeitungsmittel (MT) so konfiguriert sind, dass sie eine mechanische Impedanz einer Einheit bestimmen, die die Berührungswand (PT) und den Finger umfasst, indem sie ein Verhältnis zwischen einer ersten Hilbert-Transformierten, die auf eine erste periodische Funktion angewendet wird, die für die Einwirkung gemäß der vordefinierten Frequenz auf die Berührungswand (PT) bei fehlender Berührung repräsentativ ist, durchführen, und einer dritten Hilbert-Transformation, die auf eine dritte periodische Funktion angewendet wird, die repräsentativ für die Vibration ist, die an der Berührungswand (PT) in Gegenwart des Kontakts gemessen und mit einem Referenzsignal mit der vordefinierten Frequenz multipliziert wird und einen ersten Phasenabschnitt von Null und einen zweiten Phasenabschnitt von 90° aufweist, und dann so konfiguriert sind, dass sie die mechanische Impedanz des Fingers bestimmen, indem sie eine Differenz zwischen der mechanischen Impedanz der Anordnung und der mechanischen Impedanz der Berührungswand (PT) in Abwesenheit des Kontakts bestimmen.

2. Vorrichtung nach Anspruch 1, **dadurch gekennzeichnet, dass** die Einwirkungsmittel (MA) so konfiguriert sind, dass sie auf die Berührungswand (PT) in einer Weise einwirken, die aus einer elektrostatischen Weise, einer elektromagnetischen Weise, einer piezoelektrischen Weise und einer magnetostriktiven Weise ausgewählt ist.

3. Gerät (AP) mit mindestens einer taktilen Wand (PT), die von einem Finger eines Benutzers berührt werden kann, **dadurch gekennzeichnet, dass** es außerdem mindestens eine Messvorrichtung (DM) nach einem der vorhergehenden Ansprüche umfasst, die mit der taktilen Wand (PT) gekoppelt ist.

4. Gerät nach Anspruch 3, **dadurch gekennzeichnet, dass** es außerdem Steuermittel (MC) umfasst, um für die Aktionsmittel (MA) ein Steuersignal zu erzeugen, das dazu bestimmt ist, eine Amplitude ihrer Aktion zu variieren, wenn die mechanische Impedanz des Fingers über einem Schwellenwert liegt, der für einen Kontaktwunsch des Nutzers repräsentativ ist, und dann ein Steuersignal für eine Funktion zu erzeugen, falls eine Änderung der mechanischen Impedanz des Fingers infolge dieser Amplitudenänderung erfasst wird.

5. Gerät nach Anspruch 3, **dadurch gekennzeichnet, dass** es außerdem Steuermittel (MC) zur Erzeugung eines Signals zur Steuerung einer Funktion umfasst, wenn die mechanische Impedanz größer als ein Schwellenwert ist, der für einen Kontaktwunsch des Nutzers repräsentativ ist.

6. Vorrichtung nach einem der Ansprüche 3 bis 5, **dadurch gekennzeichnet, dass** die berührungsempfindliche Wand (PT) Teil eines Anzeigebildschirms ist und geeignet ist, mindestens einen Teil von Bildern anzuzeigen.

7. Fahrzeug, **dadurch gekennzeichnet, dass** es mindestens ein Gerät (AP) nach einem der Ansprüche 3 bis 6 umfasst.

## Claims

1. Measuring device (DM) for an apparatus (AP) comprising at least one tactile wall (PT) contactable by a user's finger, comprising i) action means (MA) acting on said tactile wall (PT) in order to vibrate said tactile wall (PT) and said finger at at least one predefined frequency, during contact, ii) measuring means (MM) for measuring a vibration of said tactile wall (PT) in the presence of said predefined frequency and said contact, and iii) processing means (MT) for determining a mechanical impedance of the finger, as a function of said predefined frequency, of said measured vibration, and of a mechanical impedance of said tactile wall (PT) in the absence of contact, **characterized in that** said action means (MA) are configured to act on said tactile wall (PT) at a single predefined frequency during said contact, **in that** said measuring means (MM) are configured to measure said vibration in amplitude and in phase, and **in that** said processing means (MT) are configured to determine a mechanical impedance of an assembly comprising said tactile wall (PT) and said finger by performing a ratio between a first Hilbert transform applied to a first periodic function representative of said action according to the predefined frequency on said tactile wall (PT) in the absence of contact, and a third Hilbert transform applied to a third periodic function representative of said vibration measured on said tactile wall (PT) in the presence of said contact and multiplied by a reference signal at said predefined frequency and having a first phase part equal to zero and a second phase part equal to 90°, then are configured to determine said mechanical impedance of the finger by determining a difference between said mechanical impedance of the assembly and said mechanical impedance of said tactile wall (PT) in the absence of contact.

2. Device according to claim 1, **characterized in that** said action means (MA) are configured to act on said tactile wall (PT) in a manner selected from electrostatic, electromagnetic, piezoelectric and magnetostrictive.

3. A device (AP) comprising at least one tactile wall (PT) contactable by a user's finger, **characterized in that** it further comprises at least one measuring device (DM) according to one of the preceding claims, coupled to said tactile wall (PT).

4. Apparatus according to claim 3, **characterized in that** it further comprises control means (MC) for generating for said action means (MA) a control signal intended to vary an amplitude of their action when said mechanical impedance of the finger is greater than a threshold representative of a desire for contact on the part of said user, then for generating a control signal for a function in the event of detection of a variation in said mechanical impedance of the finger subsequent to this amplitude variation.

5. Apparatus according to claim 3, **characterized in that** it further comprises control means (MC) for generating a signal for controlling a function when said mechanical impedance is greater than a threshold representative of a willingness to contact of said user.

6. Device according to one of claims 3 to 5, **characterized in that** said touch wall (PT) forms part of a display screen and is suitable for displaying at least a portion of images.

7. Vehicle, **characterized in that** it comprises at least one device (AP) according to one of claims 3 to 6.
